(19) Europäisches Patentamt
European Patent Office
Office européen des brevets

(11) Publication number: **0 131 894**
**B1**

(12) **EUROPEAN PATENT SPECIFICATION**

(45) Date of publication of patent specification: **31.05.89**

(51) Int. Cl.$^4$: **C 01 B 21/068**

(21) Application number: **84108081.5**

(22) Date of filing: **10.07.84**

(54) **A method for producing alpha-form silicon nitride fine powders.**

(30) Priority: **14.07.83 JP 128897/83**
**30.01.84 JP 128897/83**

(43) Date of publication of application:
**23.01.85 Bulletin 85/04**

(45) Publication of the grant of the patent:
**31.05.89 Bulletin 89/22**

(84) Designated Contracting States:
**DE FR GB**

(56) References cited:
**EP-A-0 080 050**
**DE-A-2 814 235**
**FR-A-2 388 763**
**GB-A- 15 641**
**GB-A-1 028 977**

(73) Proprietor: **SUMITOMO CHEMICAL COMPANY, LIMITED**
**Kitahama 4-chome 5-33**
**Chuo-ku, Osaka 541 (JP)**

(72) Inventor: **Hashimoto, Tadanori**
**12-2, Tennocho**
**Takatsuki-shi (JP)**
Inventor: **Nakano, Kazuhiko**
**1-34, Kouzu-3-chome**
**Katano-shi (JP)**
Inventor: **Hama, Masaaki**
**10-4-446, Sonehigashinocho-2-chome**
**Toyonaka-shi (JP)**
Inventor: **Matsuda, Norio**
**29-7, Oike-2-chome**
**Ibaraki-shi (JP)**

(74) Representative: **Henkel, Feiler, Hänzel & Partner**
**Möhlstrasse 37**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 131 894 B1**

**Description**

The present invention relates to a method for producing α-form silicon nitride (α-$Si_3N_4$) fine powders, and it provides a method for producing a high-quality fine α-form silicon nitride powder in good yields.

Silicon nitride is superior in thermal resistance and high-temperature strength, and its sintered body is expected as a high-strength heat-resisting material or high-precision abrasion-resisting material, for example as a material which makes it possible to realize the increase in temperature, reduction in weight and increase in efficiency of heat engines such as Diesel engines, gas turbines, etc. These thermal and mechanical properties of the sintered body depend largely upon the property of a material for the sintered body, and as such material, a high-quality α-form silicon nitride fine powder having both a shape similar to a sphere of not more than 1 μm in particular diameter and a sharp particle diameter distribution is required.

The well-known synthetic methods for silicon nitride are as follows:

(i) Direct nitridation of metallic silicon,

$$3Si + 2N_2 \rightarrow Si_3N_4$$

(ii) reduction·nitridation of silicon oxide,

$$3SiO_2 + 6C + 2N_2 \rightarrow Si_3N_4 + 6CO$$

(iii) gas-phase synthesis with silane or silicon tetrachloride, etc,

$$3SiCl_4 + 16NH_3 \rightarrow Si_3N_4 + 12NH_4Cl$$

$$3SiH_4 + 4NH_3 \rightarrow Si_3N_4 + 12H_2$$

(iv) thermal decomposition of silicon diimide, silicon tetraamide, etc

$$3Si(NH)_2 \rightarrow Si_3H_4 + 2NH_3$$

$$3Si(NH_2)_4 \rightarrow Si_3N_4 + 8NH_3$$

But, the method (i) has a defect that heat generation on direct reaction between metallic silicon powder and nitrogen gas is so violent that control of the reaction is difficult. The methods (iii) and (iv) have a feature that the fine powder of high-purity is easily obtained, but the powder obtained in an amorphous silicon nitride powder as very fine as, generally, 10 to 20 mm so that it is not suitable in its form as a sintering material. Consequently, this powder is commonly crystallized by further heat-treatment at a temperature of 1,300° to 1,500°C in a nitrogen gas atmosphere, but there are defects that it is difficult to obtain a powder having a high proportion of α-form silicon nitride, and besides that, since needle-like crystals and rod-like ones are contained as contaminants in the powder obtained on this crystallization, it is difficult to control the particle shape of the powder. Of the foregoing methods, the method (ii) is a useful one in industry in that the materials are available at a relatively low cost, the reaction operation is relatively easy, the materials used have no such dangers as corrosion of equipments, explosion, etc., and besides that silicon nitride having a high proportion of α-form silicon nitride is easily obtained. As the defect of this method, however, there are given two problems described below. One problem is that: Generally, only particles of several microns (μm) in size are obtained even though well carefully selected silicon oxide fine powder and carbon powder are used as materials, and yet in some cases, said particles contain needle-like crystals and rod-like ones, so that it is not easy to obtain a uniform α-form silicon nitride fine powder having a shape similar to a sphere of not more than 1 μm in particle diameter. The other problem is that, when the carbon:silicon oxide ratio of the material is small, the nitridation conversion is so low that unreacted silicon oxide remains. These problems become noticeable as an increase in the particle diameter of the silicon oxide powder used and form a great hindrance to obtaining the α-form silicon nitride fine powder at a lower cost.

In order to solve these defects, there are proposed a method in which the nitridation conversion is increased by adding the oxide of iron, manganese, magnesium or the like as a catalyst (refer to Yogyo Kyokai-shi, Vo. 85[II], 537—542, 1977), a method in which a silicon nitride powder is added to expect its seed effect (Japanese Patent Publication No. 23917/1979), and the like. In the former method, however, the formed silicon nitride has a particle diameter of, generally, several microns (μm) and besides contains needle-like crystals and rod-like ones, although this method is reported to increase the nitridation conversion even though a silicon oxide powder of large particle diameter and a small carbon:silicon oxide ratio are used. In other words, this method promotes the nitridation, but it has a problem in terms of the control of the particle diameter and shape of silicon nitride particles formed, having little effect in an object of producing spherical fine powders. Also, the latter method is reported to have effects to promote the nitridation and to promote the deposition of the formed silicon nitride because of the added silicon nitride powder acting as a nucleus. But these effects are hardly obtained when the carbon:silicon oxide ratio is small and the reaction temperature is as low as 1400°C. Further, when the particle diameter of silicon oxide used is large, even though a large carbon:silicon oxide ratio and a high reaction temperature are used, the nitridation rate is so low that only a silicon nitride powder having a low content of α-form silicon nitride is obtained and besides the powder is not sufficiently fine, non-uniform in particle shape and contains needle-like and rod-like crystals. In other words, this method has little effect when the silicon oxide used as a material has a large particle diameter. In the synthesis of silicon nitride by reduction·nitridation of silicon oxide, the cost of silicon oxide, a material, occupies a large percentage of the manufacturing cost of silicon nitride. The cost of silicon oxide depends upon its particle diameter, etc, and silicon oxide of not more than 1 μm in particle diameter is relatively expensive. For lowering the manufacturing cost, therefore, it is desired to use a coarse and cheap silicon oxide having a particle diameter of not less than 1 μm as much as

one can. Also in this reaction, carbon is generally added in excess of its equivalent weight in order to allow the reduction·nitridation to proceed more smoothly. Consequently, the product contains a large amount of residual unreacted carbon which must be oxidation-removed after the reduction·nitridation by calcining the product in an oxidative atmosphere. For the purposes of both facilitating this oxidation·removal and reducing the manufacturing cost, it is desirable that the amount of carbon added is as near to the equivalent weight as possible.

An object of the present invention is to provide an improved reduction·nitridation of silicon nitride.

Another object of the present invention is to provide a method for producing α-form silicon nitride fine powders having a high nitridation conversion.

A further object of the present invention is to provide a method for producing α-form silicon nitride fine powders having a shape similar to a sphere of not more than 1 μm in average particle diameter.

A still further object of the present invention is to provide a method for producing α-form silicon nitride fine powders, wherein the reduction·nitridation can smoothly be advanced even though a coarse and cheap silicon oxide is used.

The present inventors made an extensive study and as a result, found that, in the above reduction·nitridation of silicon oxide, when at least one of beryllium, magnesium, calcium, strontium, germanium, tin, titanium, hafnium and compounds thereof as well as a silicon nitride powder are added, independently of the particle diameter of the silicon oxide used, uniform α-form silicon nitride fine powders having both a high nitridation conversion and a shape similar to a sphere of not more than 1 μm in average particle diameter, can be obtained in good yields, and that, when zirconium or its compound is used, independently of the particle diameter of the silicon oxide used and even though a silicon nitride powder is not added, uniform α-form silicon nitride fine powders having both a high nitridation conversion and a particle shape similar to a sphere can be obtained in good yields. The present inventors thus attained to the present invention.

The present invention provides a method for producing α-form silicon nitride fine powders characterized in that a mixture prepared by adding at least one of additives:

(a) a mixture of at least one of Be, Mg, Ca, Sr, Ge, Sn, Ti, Hf and compounds thereof with 0.01—1 part by weight of silicon nitride powder, and

(b) a mixture of Zr and compounds thereof with 0—1 part by weight of silicon nitride powder,

in a total amount of 0.001—0.1 part by weight calculated in terms of elemental weight(s) of Be, Mg, Ca, Sr, Ge, Sn, Ti, Hf and Zr and 1 part or less by weight of silicon nitride powder, to 1 part by weight of silicon oxide powder and 0.4—4 parts by weight of carbon powder, is heat-treated in a nitrogen-containing atmosphere to subject the silicon oxide to reduction·nitridation.

The present invention will be illustrated in detail hereinafter.

In the present invention, when the amount of carbon powder added is less than 0.4 parts by weight based on 1 part by weight of a silicon oxide powder, it results that, in the reduction·nitridation equation, $3SiO_2 + 6C + 2N_2 \rightarrow Si_3N_4 + 6CO$, said amount is less than the equivalent weight so that unreacted $SiO_2$ remains. While, when said amount is more than 4 parts by weight, formation of a β-form silicon nitride increases and besides the yield decreases. The amount of carbon powder added is, therefore, preferably 0.4 to 4 parts by weight, more preferably 0.6 to 1.2 parts by weight.

It is desirable that the silicon nitride powder is as fine as possible, preferably an α-$Si_3N_4$ fine powder having a shape similar to a sphere of not more than 1 μm in average particle diameter, and also that the BET specific surface area of the powder is not less than 10 $m^2$/g. The silicon nitride now being on the market as an α-form silicon comprises little amount of the other crystal system, but the powder of such silicon nitride comprising α-form crystal system in substance can be used in the present invention. When the additive (a) is used, the amount of the silicon nitride powder added is preferably 0.01 to 1 part by weight based on 1 part by weight of the silicon oxide powder. When the amount of silicon nitride powder is less than 0.01 part by weight, the effect of the powder to act as a nucleus on silicon nitride formation is hardly noticed, the uniform α-$Si_3N_4$ powder of not more than 1 μm in particle diameter being not obtained, and in some cases, said α-$Si_3N_4$ powder is contaminated with needle-like or rod-like crystals. Contrary to this, when said amount is larger than 1 part by weight, the α-$Si_3N_4$ powder obtained contains the added α-$Si_3N_4$ in larger amounts than the freshly formed α-$Si_3N_4$, thereby resulting in that, rather the characteristics of the added α-$Si_3N_4$ unpreferably appears. From the practical point of view, a minimized amount of added α-$Si_3N_4$ powder is better for production efficiency, and therefore, it is desirable to add preferably 0.01 to 0.1 part by weight. While, when the additive (b) is used, uniform α-form silicon nitride fine powders having both a high nitridation conversion and a particle shape similar to a sphere are obtained without addition of the silicon nitride powder. But, by adding not more than 1 part by weight of the silicon nitride powder, the reaction can be carried out more preferably and uniform α-$Si_3N_4$ powders of not more than 1 μm in average particle diameter can be obtained. When the amount of the silicon nitride powder is larger than 1 part by weight, the α-$Si_3N_4$ powder obtained contains the added α-$Si_3N_4$ in larger amounts than the freshly formed α-$Si_3N_4$, thereby resulting in that, rather, the characteristics of the added α-$Si_3N_4$ unpreferably appears. From the practical point of view, a minimized amount of added α-$Si_3N_4$ powder is better for production efficiency, and therefore, it is desirable to add preferably 0.01 to 0.1 part by weight. Two of these additives may be used together.

Beryllium and its compounds include for example metallic beryllium, beryllium oxide, beryllium

hydroxide, beryllium fluoride, beryllium chloride, basic beryllium carbonate, beryllium nitrate, beryllium sulfate, beryllium nitride, etc. Magnesium and its compounds include for example metallic magnesium , magnesium oxide, magnesium hydroxide, magnesium carbonate, basic magnesium carbonate, magnesium chloride, magnesium nitrate, magnesium sulfate, magnesium isopropoxide, magnesium nitride, etc. Calcium and its compounds include for example metallic calcium, calcium oxide, calcium hydroxide, calcium peroxide, calcium carbonate, calcium flouride, calcium chloride, calcium nitrate, calcium sulfate, calcium isopropoxide, calcium nitride, calcium carbide, etc. Strontium and its compounds include for example metallic strontium, strontium oxide, strontium hydroxide, strontium fluoride, strontium chloride, strontium carbonate, strontium nitrate, strontium sulfate, strontium isopropoxide, strontium nitride, etc. Germanium and its compounds include for example metallic germanium, germanium oxide, germanium sulfide, germanium fluoride, germanium chloride, germanium ethoxide, germanium nitride, germanium carbide, etc. Tin and its compounds include for example metallic tin, tin oxide, tin chloride, tin bromide, tin iodide, tin hydroxide, strontium stannate, etc. Titanium and its compounds include for example metallic titanium, titanium oxide, titanium chloride, titanium hydride, titanium sulfate, titanyl sulfate, titanium fluoride, strontium titanate, titanium nitride, titanium carbide, etc. Zirocnium and its compounds include for example metallic zirconium, zirconium silicide, zirconium oxide, zirconium sulfate, zirconyl sulfate, zirconium chloride, zirconyl chloride, zirconium silicate, zirconium nitrate, zirconyl nitrate, zirconium fluoride, zirconium butoxide, zirconium carbide, zirconium nitride, etc. Hafnium and its compounds include for example metallic hafnium, hafnium chloride, hafnium carbide, hafnium nitride, etc. Generally, a silicon oxide powder, a carbon powder, a silicon nitride powder, metallic elements (i.e. beryllium, magnesium, calcium, strontium, germanium, tin, titanium, zirconium and hafnium) and their compounds, which are used as materials, are mixed, in many cases, with addition of water on a wet-type ball mill in order to make the mixing more uniform. It is therefore more desirable to use the water-soluble compounds of said metallic elements than using the elements themselves. Also, the substances given above may be added alone or in mixtures of two or more of them. But, the amount of the substance added is preferably within a range of 0.001 to 0.1 part by weight, as converted to the total weight of beryllium or/and magnesium or/and calcium or/and strontium or/and germanium or/and tin or/and titanium or/and zironcium or/and hafnium elements, based on 1 part by weight of the silicon oxide powder. Amounts less than 0.001 part by weight have little effect to promote the nitridation and to form the fine powder of $\alpha$-$Si_3N_4$. While, when the amount is more than 0.1 by weight, the formed $\alpha$-$Si_3N_4$ contains large amounts of Be, Mg, Ca, Sr, Ge, Sn, Ti, Zr and Hf, being not preferred as a sintering material. More preferably, the amount is within a range of 0.005 to 0.03 part by weight.

The mixture thus obtained is heat-treated in a nitrogen-containing atmosphere to subject it to reduction·nitridation. As such atmosphere, nitrogen-containing reaction gas systems such as $N_2$, $NH_3$, $N_2$—$H_2$, $N_2$—Ar, etc may be used. The heat-treatment temperature may be selected from a range of 1,350° to 1,550°C, preferably 1,400° to 1,500°C. At temperatures lower than 1,350°C, the nitridation does not proceed suficiently, while temperatures more than 1,550°C unpreferably increases both the proportion of $\beta$-$Si_3N_4$ and formation of SiC.

Further, for the purpose of removing the residual carbon, it is desirable to carry out heat-treatment in an oxidative atmosphere, and generally, the temperature of the heat-treatment is preferably within a range of 600° to 800°C.

As described above, the present invention includes adding the additive comprising a silicon nitride powder, the foregoing metallic element (Be, Mg, Ca, Sr, Ge, Sn, Ti, Zr and Hf) or its compounds to a silicon oxide powder and a carbon powder, mixing these substances, and heat-treating the resulting mixture in a nitrogen-containing atmosphere. By this method, not only the catalytic effect of said metallic element excluding Zr or its compounds on the reduction·nitridation, but also the fine powder-forming effect owing to reaction between these substances and the silicon nitride powder are developed. And, the $\alpha$-form silicon nitride fine powder having high contents of nitrogen and $\alpha$-$Si_3N_4$ and a shape similar to a sphere of not more than 1 μm in average particle diameter can be obtained, which was so far difficult to obtain, when a silicon oxide powder having a relatively large particle diameter was used, by merely adding said metallic element, its compound or silicon nitride powder alone under the reaction condition wherein the carbon:silicon oxide ratio was near to the equivalent ratio and the heat-treatment temperature was less than 1400°C. Also, when zirconium or its compound is added, the uniform $\alpha$-form silicon nitride fine powder having a high nitridation conversion and a particle shape similar to a sphere is obtained without adding the silicon nitride powder, but the reaction can be carried out more preferably by adding the silicon nitride powder. According to the present invention, production of the powdery material for silicon nitride sintered products superior in thermal resistance and high-temperature strength can be carried out more advantageously in industry.

Next, the present invention will be illustrated specifically with reference to the following examples, but the present invention is not to be interpreted as being limited thereto.

Example 1

As a silicon oxide powder, a commercially available amorphous $SiO_2$ (average particle diameter, 17 μm; BET specific surface area, 0.3 $m^2/g$) was used.

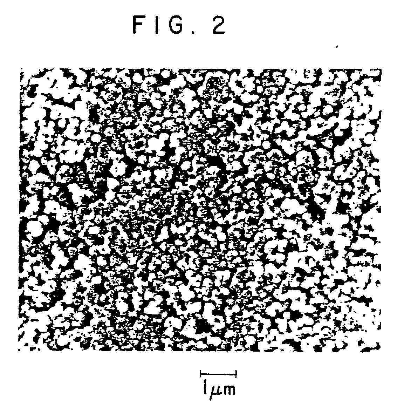

An acetylene black powdery product was used as a carbon powder, and an $\alpha$-$Si_3N_4$ powder (average

particle diameter, 0.6 μm; BET specific surface area, 17 $m^2/g$) was used as a silicon nitride powder. As a magnesium and calcium sources, commercially available $Mg(NO_3)_2 \cdot 6H_2O$ and $Ca(NO_3)_2 \cdot 4H_2O$ were used. These powders were mixed on a wet-type ball mill in proportions shown in Table 1, dried and heat-treated at a temperature of 1,400°C for 4 to 6 hours while passing $N_2$ gas or $N_2 + H_2$ gas to subject $SiO_2$ to reduction·nitridation. The resulting powder was further heat-treated in air at 800°C for 4 hours to obtain an $Si_3N_4$ powder deprived of unreacted carbon by burning. Every $Si_3N_4$ powder thus synthesized was measured for an average particle diameter, N content and α-$Si_3H_4$ content (obtained by X-ray diffraction pattern), and these values were shown in Table 1. Also, the particle size distribution curve and scanning electron-microscopic photograph of the $Si_3N_4$ powder obtained from the sample No. 2 were shown in Fig. 1 and Fig. 2, respectively. Fig. 1 shows the particle size distribution curve of the α-form silicon nitride powder obtained by the method of the present invention. Fig. 2 shows the scanning electron-microscopic photograph of the powder.

Example 2

An $Si_3N_4$ powder was synthesized according to the procedure of Example 1 using the same powders as used in Example 1 except that Aerosil 200 (average particle diameter, 12 nm; BET specific surface area, 200 $m^2/g$; a product of Japan Aerosil Co.) was used as a silicon oxide powder. The average particle diameter, N content and α-$Si_2N_4$ content of every powder obtained were also shown in Table 1.

Comparative Example 1

An $Si_3N_4$ powder was synthesized according to the procedure of Example 1 in varying conditions: The same powders as used in Example 1 were used, but adding (1) no silicon nitride powder, (2) no magnesium nitrate no calcium nitrate and (3) neither of them. The average particle diameter, N content and α-$Si_3N_4$ content of every powder obtained were also shown in Table 1.

Table 1

| Sample | | Composition of material (part by weight) | | | | | Reaction condition | | | Characteristics of product | | |
|---|---|---|---|---|---|---|---|---|---|---|---|---|
| | | $SiO_2$ | C | Seed | Catalyst | | Temperature (°C) | Time (hr) | Atmosphere | Average particle diameter (μm) | N content (%) | Amount of $\alpha$-$Si_3N_4$ (%) |
| | | | | $\alpha$-$Si_3N_4$ | Mg | Ca | | | | | | |
| Example 1 | 1 | 1 | 0.6 | 0.1 | 0.01 | - | 1,400 | 6 | $N_2$ | 0.6 | 37.5 | 96 |
| | 2 | 1 | 0.8 | 0.1 | 0.01 | - | 1,400 | 4 | $N_2$ | 0.6 | 37.8 | 98 |
| | 3 | 1 | 0.8 | 0.1 | 0.01 | - | 1,400 | 6 | $N_2+H_2$ | 0.7 | 38.0 | 97 |
| | 4 | 1 | 0.8 | 0.1 | 0.005 | - | 1,400 | 6 | $N_2$ | 0.5 | 37.4 | 96 |
| | 5 | 1 | 0.8 | 0.05 | 0.01 | - | 1,400 | 6 | $N_2$ | 0.8 | 37.7 | 97 |
| | 6 | 1 | 0.8 | 0.1 | - | 0.01 | 1,400 | 6 | $N_2$ | 0.6 | 37.6 | 96 |
| Example 2 | 7 | 1 | 0.6 | 0.05 | 0.01 | - | 1,400 | 6 | $N_2$ | 0.7 | 38.2 | 97 |
| | 8 | 1 | 0.4 | 0.1 | 0.02 | - | 1,400 | 6 | $N_2$ | 0.6 | 37.3 | 96 |
| Comparative example 1 | 9 | 1 | 3 | - | - | - | 1,400 | 6 | $N_2$ | 6.0 | 28.3 | 90 |
| | 10 | 1 | 0.8 | 0.1 | - | - | 1,400 | 6 | $N_2$ | 1.2 | 32.2 | 94 |
| | 11 | 1 | 0.8 | - | 0.01 | - | 1,400 | 6 | $N_2$ | Rod-like crystals | 37.6 | 95 |

Example 3

As a silicon oxide powder, a commercially available quartz sand powder (average particle diameter, 6 μm; BET specific surface area, 1.2 $m^2/g$) was used. As a carbon powder, a commercially available carbon black was used, and as a silicon nitride powder was used as an $\alpha$-$Si_3N_4$ powder of 0.4 μm in average particle diameter and of 20 $m^2/g$ in BET specific surface area. As a magnesium and calcium sources, commercially available $Mg(NO_3)_2 \cdot 6H_2O$ and $Ca(NO_3)_2 \cdot 4H_2O$ were used, respectively. Using these powders, an $Si_3N_4$ powder was synthesized according to the procedure of Example 1. The average particle diameter, N content and $\alpha$-$Si_3N_4$ content of every powder synthesized were shown in Table 2.

Table 2

| | | Composition of material (part by weight) | | | | | Reaction condition | | | Characteristics of product | | |
|---|---|---|---|---|---|---|---|---|---|---|---|---|
| | | $SiO_2$ | C | Seed | Catalyst | | | | | | | |
| | | | | $\alpha$-$Si_3N_4$ | Mg | Ca | Temperature (°C) | Time (hr) | Atmosphere | Average particle diameter (μm) | N content (%) | Amount of $\alpha$-$Si_3N_4$ (%) |
| Example 3 | 12 | 1 | 0.8 | 0.1 | 0.01 | - | 1,400 | 6 | $N_2$ | 0.4 | 37.9 | 98 |
| | 13 | 1 | 0.8 | 0.1 | 0.004 | - | 1,400 | 6 | $N_2$ | 0.4 | 37.7 | 98 |
| | 14 | 1 | 0.8 | 0.02 | 0.01 | - | 1,400 | 6 | $N_2$ | 0.5 | 37.8 | 98 |
| | 15 | 1 | 0.8 | 0.02 | 0.004 | - | 1,400 | 6 | $N_2$ | 0.4 | 37.6 | 98 |
| | 16 | 1 | 0.8 | 0.1 | - | 0.01 | 1,400 | 6 | $N_2$ | 0.5 | 37.5 | 96 |

Example 4

As a silicon oxide powder, a commercially available quartz sand powder (average particle diameter, 6 µm; BET specific surface area, 1.2 $m^2/g$) was used. As a carbon powder, a commecially available carbon black was used, and as a silicon nitride powder was used an $\alpha$-$Si_3N_4$ powder of 0.4 µm in average particle diameter and of 20 $m^2/g$ in BET specific surface area. As a catalyst, $BE(NO_3)_2 \cdot 3H_2O$, $Mg(NO_3)_2 \cdot 6H_2O$, $Ca(NO_3)_2 \cdot 4H_2O$, $Sr(NO_3)_2 \cdot 4H_2O$, $GeO_2$, $SnO_2$, $TiOSO_4$, $ZrO(NO_3)_2 \cdot 2H_2O$ and $HfO_2$ were used. Using these powders, an $Si_3N_4$ powder was synthesized according to the procedure of Example 1. The reaction temperature was 1,400°C and 1,450°C. The average particle diameter, N content and $\alpha$-$Si_3N_4$ content of every powder synthesized were shown in Table 3.

Table 3

| | | Composition of material (part by weight) | | | | | | | | | | | |
|---|---|---|---|---|---|---|---|---|---|---|---|---|---|
| | | $SiO_2$ | C | Seed | Catalyst | | | | | | | | |
| | | | | $\alpha$-$Si_3N_4$ | Be | Mg | Ca | Sr | Ge | Sn | Ti | Zr | Hf |
| Example 4 | 17 | 1 | 0.8 | 0.1 | 0.01 | | | | | | | | |
| | 18 | 1 | 0.8 | 0.1 | | | | 0.01 | | | | | |
| | 19 | 1 | 0.8 | 0.1 | | | | | 0.01 | | | | |
| | 20 | 1 | 0.8 | 0.1 | | | | | | 0.01 | | | |
| | 21 | 1 | 0.8 | 0.1 | | | | | | | 0.01 | | |
| | 22 | 1 | 0.8 | 0.1 | | | | | | | | 0.01 | |
| | 23 | 1 | 0.8 | 0.1 | | | | | | | | | 0.01 |
| | 24 | 1 | 0.8 | 0.05 | | 0.005 | | 0.001 | | | 0.004 | | |
| | 25 | 1 | 0.8 | 0.05 | | 0.005 | | | 0.002 | | | 0.003 | |
| | 26 | 1 | 0.8 | 0.1 | | | | 0.005 | | | | 0.005 | |
| | 27 | 1 | 0.8 | 0.1 | | | 0.003 | | | 0.002 | | | 0.005 |
| | 28 | 1 | 0.8 | 0.1 | 0.001 | 0.001 | 0.001 | 0.001 | 0.001 | 0.001 | 0.001 | 0.001 | 0.001 |

Table 3 (cont'd)

| Reaction condition | | | Characteristics of product | | |
|---|---|---|---|---|---|
| Temperature (°C) | Time (hr) | Atmosphere | Average particle diameter (μm) | N content (%) | Amount of $\alpha$-$Si_3N_4$ (%) |
| 1,450 | 6 | $N_2$ | 0.5 | 37.4 | 98 |
| 1,450 | 6 | $N_2$ | 0.5 | 37.6 | 98 |
| 1,450 | 6 | $N_2$ | 0.6 | 37.5 | 97 |
| 1,450 | 6 | $N_2$ | 0.7 | 37.4 | 97 |
| 1,450 | 6 | $N_2$ | 0.6 | 37.3 | 97 |
| 1,450 | 6 | $N_2$ | 0.5 | 37.8 | 98 |
| 1,450 | 6 | $N_2$ | 0.6 | 37.7 | 97 |
| 1,400 | 6 | $N_2$ | 0.5 | 37.8 | 98 |
| 1,450 | 6 | $N_2$ | 0.4 | 37.6 | 98 |
| 1,450 | 6 | $N_2$ | 0.5 | 37.8 | 97 |
| 1,400 | 6 | $N_2$ | 0.6 | 37.7 | 96 |
| 1,400 | 6 | $N_2$ | 0.5 | 37.7 | 98 |

Example 5

As a silicon oxide powder, a commercially available quartz sand powder (average particle diameter, 10 μm; BET specific surface area, 1.0 $m^2/g$) was used. As a carbon powder, an acetylene black granular product was used, and as a zirconium source which was a catalyst, $ZrO(NO_3)_2 \cdot 2H_2O$ was used.

These powders were mixed on a wet-type ball mill in proportions shown in Table 4, dried and heat-treated at varying temperatures of 1,400°C and 1,450°C for 4 to 6 hours while passing $N_2$ gas to subject $SiO_2$ to reduction·nitridation. The resulting powder was further heat-treated in air at 800°C for 4 hours to obtain an $Si_3N_4$ powder deprived of unreacted carbon by burning.

Every $Si_3N_4$ powder thus synthesized was measured for an average particle diameter, N content and α-$Si_3N_4$ content (obtained from X-ray diffraction patterns), and these values were shown in Table 4.

Example 6

An $Si_3N_4$ powder was synthesized according to the procedure of Example 5 using the same powders as used in Example 5 except that Aerosil 200 (average particle diameter, 12 nm; BET specific surface area, 200 $m^2/g$; a product of Japan Aerosil Co.) was used as a silicon oxide powder. The average particle diameter, N content and α-$Si_3N_4$ content of the powder obtained were also shown in Table 4.

Comparative Example 2

Using the same powders as used in Example 5, an $Si_3N_4$ powder was synthesized according to the procedure of Example 5 without adding zirconyl nitrate which was a catalyst. The average particle diameter, N content and α-$Si_3N_4$ content of the powder obtained were also shown in Table 4.

Comparative Example 3

Using the same powders as used in Example 6, an $Si_3N_4$ powder was synthesized according to the procedure of Example 5 without adding zirconyl nitrate which was a catalyst. The average particle diameter, N content and α-$Si_3N_4$ content of the powder obtained were also shown in Table 4.

Table 4

| | | Composition of material (part by weight) | | | Reaction condition | | | Characteristics of product | | |
|---|---|---|---|---|---|---|---|---|---|---|
| | | $SiO_2$ | C | Catalyst Zr | Temperature (°C) | Time (hr) | Atmosphere | Average particle diameter (μm) | N content (%) | Amount of $\alpha$-$Si_3N_4$ (%) |
| Example 5 | 29 | 1 | 0.8 | 0.01 | 1,400 | 6 | $N_2$ | 0.8 | 37.8 | 96 |
| | 30 | 1 | 0.8 | 0.01 | 1,450 | 4 | $N_2$ | 0.7 | 37.8 | 96 |
| | 31 | 1 | 0.8 | 0.004 | 1,450 | 6 | $N_2$ | 0.8 | 37.7 | 97 |
| | 32 | 1 | 1.2 | 0.01 | 1,450 | 6 | $N_2$ | 0.7 | 37.9 | 96 |
| | 33 | 1 | 2.0 | 0.01 | 1,400 | 5 | $N_2$ | 0.8 | 37.8 | 96 |
| Example 6 | 34 | 1 | 0.8 | 0.01 | 1,400 | 6 | $N_2$ | 0.7 | 37.8 | 97 |
| | 35 | 1 | 0.8 | 0.01 | 1,450 | 5 | $N_2$ | 0.7 | 37.9 | 97 |
| | 36 | 1 | 1.2 | 0.01 | 1,400 | 5 | $N_2$ | 0.6 | 37.9 | 97 |
| Comparative example 2 | 37 | 1 | 2.0 | - | 1,450 | 6 | $N_2$ | 6.5 | 29.5 | 90 |
| Comparative example 3 | 38 | 1 | 2.0 | - | 1,450 | 6 | $N_2$ | 2.5 | 26.4 | 91 |

## Claims

1. A method for producing α-form silicon nitride fine powders characterized in that a mixture prepared by adding at least one of additives:

(a) a mixture of at least one of Be, Mg, Ca, Sr, Ge, Sn, Ti, Hf and compounds thereof with 0.01—1 part by weight of silicon nitride powder, and

(b) a mixture of Zr and compounds thereof with 0—1 part by weight of silicon nitride powder,

in a total amount of 0.001—0.1 part by weight calculated in terms of elemental weight(s) of Be, Mg, Ca, Sr, Ge, Sn, Ti, Hf and Zr and 1 part or less by weight of silicon nitride powder, to 1 part by weight of silicon oxide powder and 0.4—4 parts by weight of carbon powder, is heat-treated in a nitrogen-containing atmosphere to subject the silicon oxide to reduction·nitridation.

2. A method for producing α-form silicon nitride fine powders according to Claim 1 characterized in that the beryllium compound is beryllium nitrate, the magnesium compound is magensium nitrate, the calcium compound is calcium nitrate, the strontium compound is strontium nitrate, ther germanium compound is germanium oxide, the tin compound is tin oxide, the titanium compound is titanyl sulfate, the zirconium compound is zirconyl nitrate and the hafnium compound is hafnium oxide.

3. A method for producing α-form silicon nitride fine powders according to Claim 1 characterized in that the silicon nitride powder is substantially an α-form silicon nitride powder and its BET specific surface area is not less than 10 $m^2/g$.

## Patentansprüche

1. Verfahren zur Herstellung von feinpulverigem Siliziumnitrid in α-Form, dadurch gekennzeichnet, daß ein durch Zusatz mindestens eines der folgenden Zusatzstoffe:

(a) Gemisch aus Be, Mg, Ca, Sr, Ge, Sn, Ti und/oder Hf und/oder Verbindungen derselben mit 0,01—1 Gew.-Teil pulverförmigen Siliziumnitrids und

(b) Gemisch aus Zr und Verbindungen desselben mit 0—1 Gew.-Teil pulverförmigen Siliziumnitrids

in einer Gesamtmenge von 0,001—0,1 Gew.-Teil, berechnet als Elementargewicht(e) Be, Mg, Ca, Sr, Ge, Sn, Ti, Hf und Zr, und 1 Gew.-Teil oder weniger Siliziumnitridpulver zu 1 Gew.-Teil Siliziumoxidpulver und 0,4—4 Gew.-Teil(en) Kohlenstoffpulver gebildetes Gemisch zur Reduktion·Nitridierung des Siliziumoxids in einer stickstoffhaltigen Atmosphäre wärmebehandelt wird.

2. Verfahren zur Herstellung von feinpulverigem Siliziumnitrid in α-Form nach Anspruch 1, dadurch gekennzeichnet, daß die Berylliumverbindung aus Berylliumnitrat, die Magnesiumverbindung aus Magnesiumnitrat, die Calciumverbindung aus Calciumnitrat, die Strontiumverbindung aus Strontiumnitrat, die Germaniumverbindung aus Germaniumoxid, die Zinnverbindung aus Zinnoxid, die Titanverbindung aus Titanylsulfat, die Zirkoniumverbindung aus Zirkonylnitrat und die Hafniumverbindung aus Hafniumoxide besteht.

3. Verfahren zur Herstellung von feinpulverigem Silziumnitrid in α-Form nach Anspruch 1, dadurch gekennzeichnet, daß es sich bei dem pulverförmigen Siliziumnitrid im westenlichen um ein pulverförmiges Siliziumnitridin α-Form handelt und daß dessen spezifische Oberfläche BET nicht weniger als 10 $m^2/g$ beträgt.

## Revendications

1. Procédé de fabrication de poudres fines de nitrure silicium de forme α, caractérisé en ce qu'un mélange, préparé par addition de l'un au moins des additifs suivants:

(a) un mélange d'au moins l'un des éléments Be, Mg, Ca, Sr, Ge, Sn, Ti, Hf et de composés de ceuxi-ci avec 0,01 à 1 partie en poids de poudre de nitrure de silicium,

(b) un mélange de Zr et de composés de celui-ci avec 0 à 1 partie en poids de poudre de nitrure de silicium, dans une quantité totale de 0,001 à 0,1 partie en poids, calculée en termes de poids élémentaire(s) de Be, Mg, Ca Sr, Ge, Sn, Ti Hf et Zr et de 1 partie ou moins en poids de poudre de nitrure de silicium, à 1 partie en poids de poudre d'oxyde de silicium et à 0,4—4 parties en poids de poudre de carbone, est traité par la chaleur dans une atmosphère contenant de l'azote, afin de soumettre l'oxyde de silicium à un réduction-nituration.

2. Procédé de fabrication de poudres fines de nitrure de silicium de forme α selon la revendication 1, caractérisé en ce que le composé de béryllium est le nitrate de béryllium, le composé du magnésium est le nitrate de magnésium, le composé du calcium est le nitrate de calcium, le composé du strontium est le nitrate de strontium, le composé du germanium est l'oxyde de germanium, le composé de l'étain est l'oxyde d'étain, le composé du titane est le sulfate de titanyle, le composé du zirconium est le nitrate de zirconyle et le composé de hafnium est l'oxyde de hafnium.

3. Procédé de fabrication de poudres fines de nitrure de silicium de forme α selon la revendication 1, caractérisé en ce que la poudre de nitrure de silicium est essentiellement un poudre de nitrure de silicium de forme α et en ce que sa surface spécifique BET n'est pas inférieure à 10 $m^2/g$.

FIG. 1

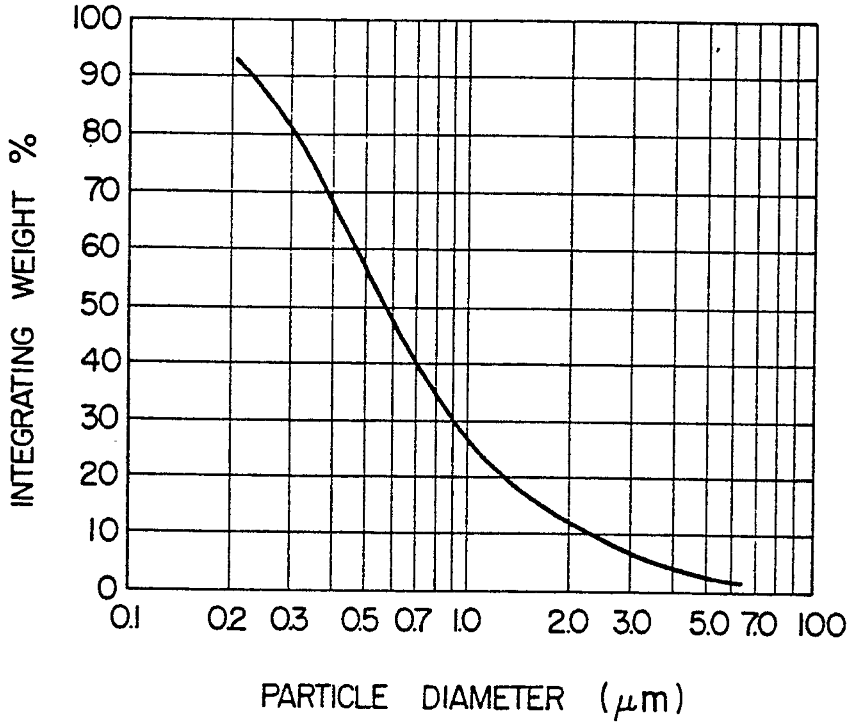

INTEGRATING WEIGHT %
100
90
80
70
60
50
40
30
20
10
0
0.1
0.2
0.3
0.5
0.7
1.0
2.0
3.0
5.0
7.0
100
PARTICLE DIAMETER (μm)

FIG. 2